# EUROPEAN PATENT SPECIFICATION

(11) **EP 3 137 290 B1**
(45) Date of publication and mention of the grant of the patent: **20.03.2019**
(21) Application number: 14729783.2
(22) Date of filing: 01.05.2014
(51) Int. Cl.: B29D 30/08, B29D 30/52, B29D 30/06, B29D 30/58, B29D 30/68, B29K 21/00, B29K 105/24

(54) **METHOD OF TIRE TREAD PRODUCTION**
VERFAHREN ZUR HERSTELLUNG EINER REIFENLAUFFLÄCHE
PROCÉDÉ DE PRODUCTION DE BANDE DE ROULEMENT

(43) Date of publication of application: 08.03.2017
(73) Proprietor: Compagnie Générale des Etablissements Michelin, 63000 Clermont-Ferrand (FR)
(72) Inventor: BAGWELL, William Bryan, Greenville, South Carolina 29605 (US)
(74) Representative: Casalonga
(86) International application number: PCT/US2014/036289
(87) International publication number: WO 2015/167565

(56) References cited:
- WO-A1-80/01262
- WO-A1-2013/009314
- US-A- 3 455 753
- US-A1- 2011 036 485

## Description

### FIELD OF THE INVENTION

The subject matter of the present disclosure relates generally to a method for producing tire tread and, more particularly, to a method for more rapidly producing tire tread.

### BACKGROUND OF THE INVENTION

A tire tread is conventionally produced by extruding a composition of uncured rubber materials as a layer that forms the tread or, when combined with other components, becomes part of the tread. Different compositions of the uncured rubber materials may be used to create different layers or parts of the extruded tread. The resulting layer of tread may then be wound onto a bobbin for later use or may be applied directly onto a tire intermediate e.g., a tire carcass. For example, the layer of tread may be wrapped about the tire carcass and cut to the appropriate length to provide a single layer of the tread. The resulting tire intermediate may then be placed into a mold where the application of heat and pressure are used to e.g., cure the materials of the intermediate, form features on the sidewalls and/or tread, and provide the resulting finished tire.

Different tire types, sizes, and/or models may also require extrusion of tread of different sizes and shapes. Additionally, different rubber compositions may be used for different tires as well. For example, depending upon the intended application for the tire, different rubber compositions may be used to provide different performance properties for wear, traction, and other properties. These different treads can require that different tooling and dies, which are expensive to manufacture and store, must be provided for each tread layer.

Typically, multiple pieces of costly equipment are required to create the tread by extrusion as just described. In addition, such equipment is understandably designed for providing tread for large production runs of many tires as would be desirable for the typical manufacturing process. As a result, regardless of how much of a given tread layer is needed for a single production run or campaign, a considerable amount of costly rubber material is consumed in start-up just to load the equipment and begin extruding the tread layer. Some of this initial material may become scrap during start-up as the machinery is adjusted to create the layer of tread desired. Once a run is completed, a certain amount of rubber material may again become scrap as it must be removed from the equipment in preparation for the manufacture of e.g., another tread layer having a different shape and/or composition. While considerable effort is made to recycle these scrap rubber materials, a typical manufacturing facility can only recycle a limited amount. As a result, significant amounts of the scrap may be discarded or require storage.

Unfortunately, the above-described equipment used for extrusion of the tread layer is inefficient for use in research and testing or for manufacture where production of only a relatively small number of tires is needed. For example, where testing of a new tread is intended, the production of less than e.g., 150 tires, or even less than 10 tires, may be enough for testing purposes. However, the extrusion of such new tread may require the design and manufacture of the same expensive tooling and dies for the tread extrusion equipment as would be used to create large manufacturing runs of e.g., 500,000 tires. Furthermore, while only a limited amount of tread may be needed for creation of the test tires, the start-up, operation, and shut-down of the tread extrusion requirement may require the extrusion of more than ten times the amount of tread that is actually needed - as well as the production of unwanted scrap.

In addition, a significant amount of time is required to create the necessary dies and tooling, and to install and operate the extrusion equipment even when only a small amount of tread is desired. This latter aspect can be particularly unfortunate where the same equipment is needed for producing other treads. For example, where a tire manufacturer has only a limited amount of extrusion equipment, the manufacture of tread for testing or small runs may require using equipment that would otherwise be operating to extrude tread for much larger runs that will be used on already commercialized products.

WO 80/01262 A1 discloses a method for creating a tread for a tire, the tire defining a circumferential direction, the method comprising providing multiple, discrete sections comprising an uncured rubber, creating a tread layer by joining the sections together along the circumferential direction, and applying the tread layer to a tire intermediate to form the tire. Reference is also made to US 3 455 753 A and WO 2013/009314 A1.

Accordingly, a method for producing tread for a tire would be useful. More particularly, a method that can be used to more quickly produce tire tread without the use of conventional extrusion equipment would be useful. Such a method that can also be employed to produce relatively small amounts of tread without creating large amounts of scrap would be particularly beneficial. Such a method that can also be used to efficiently create different types or shapes of tread from a variety of rubber materials for use in e.g., testing, research, and/or relatively small runs would also be useful. Such a method that can also be used to create a tread having different layers and/or components within the tread would also be useful.

### SUMMARY OF THE INVENTION

The present invention provides a method of manufacturing tread for a tire without necessarily extruding the tread profile. The tread is created from multiple discrete parts that are cut from a sheet of uncured rubber material. The parts are joined together to create the tread, which can be applied to a tire intermediate and cured to form a tire. Different treads formed from different rubber compositions may be created. The treads may also be created in varying shape and lengths with different rubber compositions used in different parts of the tread. One or more tread pieces can be applied to the same or different tire intermediates, which may be advantageous for simultaneous testing of different tread designs. As such, the present invention allows for more rapid creation, testing, and use of tread than is obtainable through conventional extrusion techniques while at the same time allowing a manufacturer to avoid the creation of dies, tooling, and the amount of scrap typically associated with conventional extrusion techniques. Additional objects and advantages of the invention will be set forth in part in the following description, or may be apparent from the description, or may be learned through practice of the invention.

The present invention provides a method for creating a tread for a tire in accordance with independent claim 1. The method includes the steps of cutting multiple, discrete sections out of a sheet comprising an uncured rubber, wherein each section has a pair of opposing faces; creating a tread layer by joining the sections together so that the faces of one section are joined with the opposing faces of adjacent sections; and applying the tread layer to a tire intermediate to form the tire.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures, in which:
FIG. 1 illustrates a perspective view of an exemplary tread as may be manufactured by an exemplary method of the present invention.
FIG. 2 illustrates a perspective view of an exemplary cutting step of the present invention.
FIG. 3 illustrates a perspective view of exemplary joining step of the present invention in which cut sections are joined together.
FIG. 4 provides a perspective view of another exemplary joining step of the present invention in which cut subparts are joined to create an exemplary and intermediate section as illustrated in FIG. 5.
FIG. 6 is a perspective view of an exemplary tread of the present invention created by joined sections formed from various subparts.
FIG. 7 is a perspective view of another exemplary and intermediate section of the present invention.
FIG. 8 is a side view of another exemplary and intermediate section of the present invention.
FIG. 9 is a side view of an exemplary tire as may be used in research and testing of multiple, prototype treads.

### DETAILED DESCRIPTION

For purposes of describing the invention, reference now will be made in detail to exemplary embodiments including exemplary devices and exemplary methods of the invention, one or more examples of which are illustrated in the drawings. Each embodiment is provided by way of explanation of the invention, not limitation of the invention. In fact, it will be apparent to those skilled in the art that various modifications and variations can be made in the present invention without departing from the scope of the invention. For instance, features or steps illustrated or described as part of one embodiment, can be used with another embodiment to yield a still further embodiment. Thus, it is intended that the present invention covers such modifications and variations as come within the scope of the appended claims.

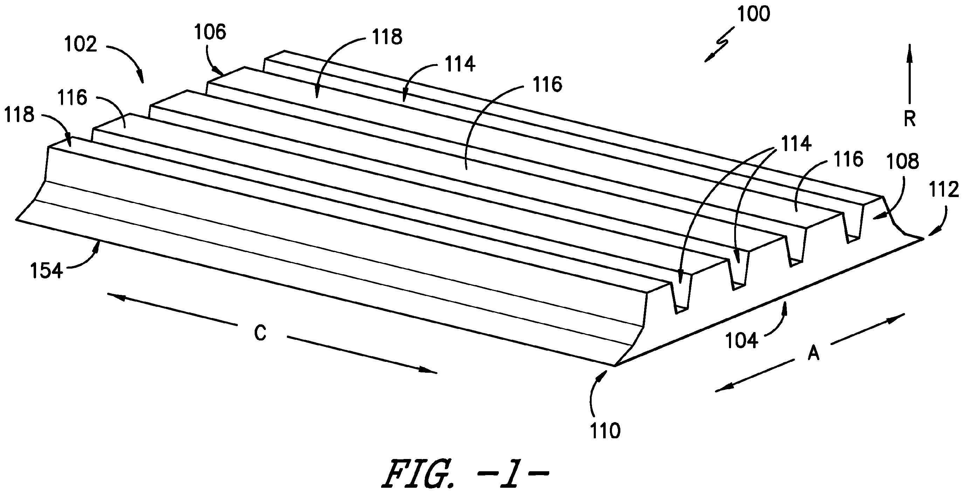

FIG. 1 provides a perspective view of an exemplary tread layer 100 that can be created with an exemplary method of the present invention. The manufacture of tread layer 100 may be desirable for purposes of testing. For example, tread layer 100 may include one or more new features for which performance testing on a tire is desirable. Tread layer 100 may be created from a new composition or formulation that includes rubber and potentially other materials for which performance testing is needed. Alternatively, the manufacture of tread layer 100 in lengths (as measured along circumferential direction C) smaller than can typically be provided by a conventional extrusion process may be desired. For example, a small run - i.e., the production of a relatively small number of tires - may be desired. Tread layer 100 may have a length that corresponds to the amount needed for tire testing and/or production or may also be manufactured in a length that is subsequently cut to provide the precise length(s) desired for a particular application.

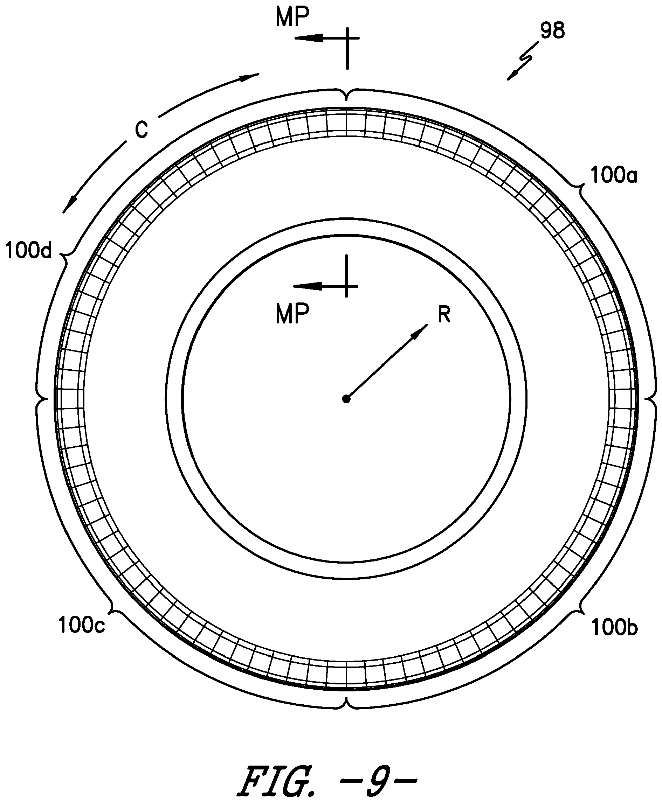

Referring to FIG. 1 and FIG. 9, as used herein, circumferential direction C (also referred to as the longitudinal direction) is the direction corresponding to the periphery of tire 98 and is defined by the direction of rotation of the tire during normal operation. Tire 98 rolls about an axis of rotation that is parallel to the axial direction A (FIG. 1). A meridian plane (e.g., MP in FIG. 9) of a tire refers to a plane within which lies the axis of rotation of the tire. Circumferential direction C is sometimes used herein to denote a direction along a tread or tread layer even when the tread may be depicted as linear only because it has not yet been applied to a tire intermediate.

As such, referring to FIG. 1, tread layer 100 extends longitudinally along circumferential direction C between opposing ends 102, 104, which each have respective opposing faces 106, 108. Tread layer 100 has a width along the axial direction A between shoulder portions 110 and 112. Tread layer 100 defines a ground contacting surface 118 that is opposite to a base surface 154, which may be placed against the surface of a tire intermediate such as a tire carcass during the manufacturing process. Faces 106 and 108 may be orthogonal to base surface 154 or may be provided with a beveled or angled orientation to facilitate joining ends 102, 104.

For this exemplary embodiment, tread layer 100 includes multiple grooves 114 and ribs 116. In a subsequent curing operation, additional features may be formed or molded into the grooves 114 and/or ribs 116. The present invention is not limited to the ribbed tread layer 100 shown. As will be understood using the teachings disclosed herein, multiple other shapes having e.g., a different number of ribs and grooves of different shapes and widths may be used as well. Tread blocks may also be used. The relative thickness of tread layer 100 may also be different from that shown in FIG. 1.

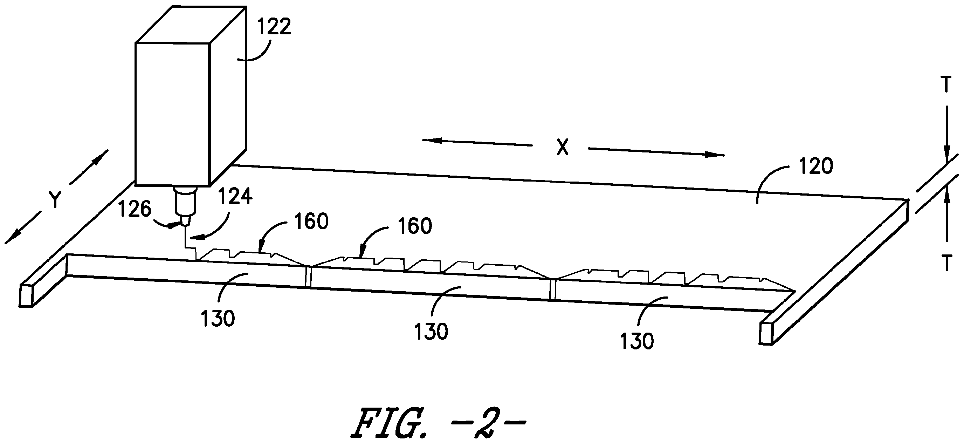

FIG. 2 illustrates an exemplary cutting step of the present invention. A sheet 120 of an uncured rubber having a thickness T is provided in a planar or relatively flat orientation relative to cutting device 122. Sheet 120 may be provided in shapes other than as shown in FIG. 2 and may be e.g., extruded from one or more uncured rubber materials. For this exemplary process, cutting device 122 is a water jet device that pressurizes water to a relatively high pressure that is converted to a high velocity jet 124 upon exiting nozzle 126. For example, pressures of 3,447 to 6,205 bar (50,000 to 90,000 psi (pounds per square inch)) may be used to provide velocities at or above 1,448 km/h (900 miles per hour) at the exit of nozzle 126. Other types of cutting devices may be employed as well.

As shown, jet 124 is directed towards sheet 120. When the speed of water travelling as jet 124 is sufficiently high, jet 124 will cut completely through sheet 120. By adjusting variables such as e.g., the diameter and speed of jet 124, the resulting kerf 160 can be used to cut multiple, discrete sections 130 from sheet 120. More particularly, a positioner (not shown) is used to move water jet cutting device 122 along the x and y directions to control the position of jet 124 and the resulting shape of sections 130 that are cut completely out of sheet 120. In one exemplary aspect of the invention, a jet 124 in the range of about 0.1 mm to about 0.5 mm, or about 0.2 mm, may be used for jet 124. Other diameters may be used as well.

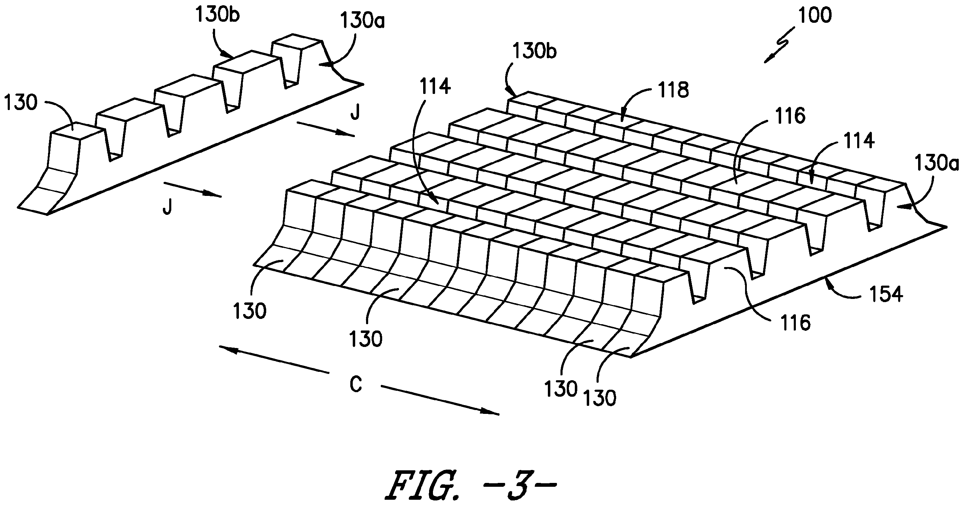

After cutting multiple, discrete sections 130, tread layer 100 is created by joining sections 130 together. As shown in FIG. 3, sections 130 have corresponding profiles or shapes that are identical to each other as viewed along circumferential direction C. Additionally, a cross section in the meridian plane MP of each section 130 is also identical to a cross-section along a meridian plane of the desired tread layer 100.

Each section 130 has a pair of opposing faces 130a and 130b. Due to the corresponding profiles, sections 130 can be combined together by joining (arrows J) the opposing faces 130a and 130b of one section 130 to an opposing face 130a or 130b of another section 130 in an adjacent manner along circumferential direction C. In one exemplary aspect of the invention, the uncured rubber materials used to construct sections 130 can have sufficient tackiness to hold sections 130 together during subsequent processing steps such as e.g., placement on a tire carcass and curing. Accordingly, for this exemplary aspect, sections 130 are joined together in manner that matches the corresponding profiles together as shown in e.g., FIG. 3, and a slight pressure along circumferential direction C may be applied.

In another exemplary aspect of the invention, adjacent sections 130 are combined after applying a dissolution to one or both opposing faces 130a and 130b of an uncured rubber section 130 to provide sufficient tackiness for joining with another uncured rubber section 130. A suitable dissolution may be made, for example, by mixing a rubber compound into a light solvent such as heptane, hexane, light mineral spirits or mixtures thereof. An example of a suitable rubber compound not meant to limit the invention includes natural rubber and a vulcanizing system such as ZnO (zinc oxide), sulfur, and one or more vulcanization accelerators and may further include other materials such as processing aids, plasticizers, fillers, antioxidants, antidegradants, and so forth as known to those skilled in the art. Such rubber compositions and their methods of making are well known. The rubber composition mixed with the solvent may be the same or different from the rubber composition surfaces 130a or 130b to which it is applied to provide tackiness.

By way of further example, the dissolution may be manufactured by mixing the rubber compound with the solvent to form a dissolution that includes, for example, between 3 weight percent and 12 weight percent of the rubber compound. The rubber compound is at least partially dissolved in the solvent to form the dissolution and the dissolution may be applied to the surfaces 130a and/or 130b by brush, mop, spraying or other suitable process. The dissolution is typically stirred before being applied to the surfaces to suspend any particles in the dissolution that may have settled to the bottom of the container. After the dissolution is applied to the surface, the solvent is allowed time to evaporate for a minute or so and leaves behind a tacky surface suitable for holding the uncured rubber sections 130 together until they are later cured. Additionally, after allowing time for evaporation, a pressure along circumferential direction C may be applied when joining sections 130 to create tread layer 100.

The combination of sections 130 creates a tread layer 100 having the features desired (e.g., ribs 114 and grooves 116). Tread layer 100 can then be applied to a tire intermediate such as a tire carcass, which can then be subject to additional processing steps such as curing to form the finished tire. Alternatively, tread layer 100 may be cut (with orthogonal or beveled ends 102, 104 as previously described) to the desired length and then applied to a tire intermediate. In the curing step, the application of heat and pressure is used to cure the previously uncured rubber materials used for section 130 and the tire intermediate and may also apply additional features to tread layer 100 along ground contacting surface 118. After curing, the discrete sections 130 may no longer be readily visible to the eye such that tread layer 100 appears uniform as depicted in FIG. 1.

By determining the thickness T of each section 130 and the number of sections 130 that are joined, the resulting length of tread layer 100 along circumferential direction C can be readily determined and provided in the length desired. As such, one or more tread layers 100 can be efficiently provided for the production of a single tire, a few tires, or a relatively large amount of tires. While these tread layers 100 may be cut to the lengths desired, the overall amount of scrap that is created can be substantially minimized relative to the conventional process where the tread profile is extruded.

In one exemplary embodiment, thickness T may be in the range of 3 mm to 100 mm. Other values for the thickness of T may be used as well. In general, an increased thickness T can reduce the number of sections 130 needed to produce the overall length desired for tread layer 100.

Accordingly, this exemplary method of the present invention can provide significant savings in time and materials as compared to a conventional tread extrusion process. For example, the creation of expensive dies and other tooling required for extruding the tread profile can be avoided. The relatively large amount of scrap created during e.g., startup and shutdown of machines used in the extrusion process can be reduced or eliminated. Additionally, the desired length of tread layer 100 along circumferential direction C can be determined more carefully without producing substantially more length than is needed. Specifically, a tread layer 100 having e.g., a length sufficient to cover a portion or the entire circumference of just one tire may be provided with only a minimal amount being trimmed from the length for fitting onto the tire. By comparison, the smallest run possible from a conventional tire extrusion process could still be enough to cover 150 tires or more with the resulting tread layer. As such, the savings that can be achieved using the present invention are substantial. Different sheets 120 of different uncured rubber compositions may also be used so that tread layers 100 of differing compositions may be tested. By changing the profile of section 130, different tread shapes or profiles can also be tested.

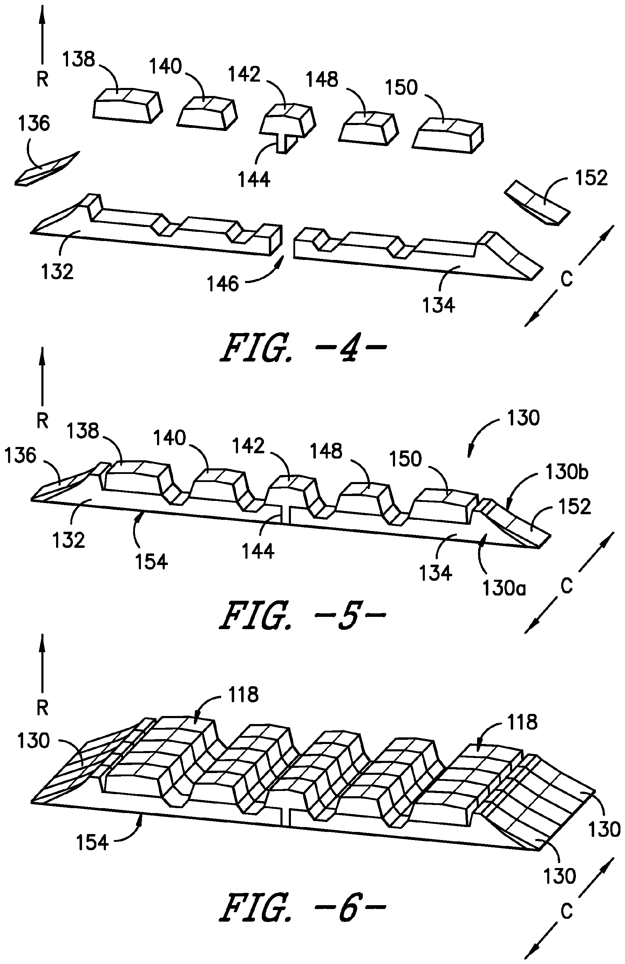

FIGS. 4, 5, and 6 illustrate certain aspects of another exemplary method of the present invention. More particularly, for this exemplary aspect, each discrete section 130 is created from multiple discrete subparts that are cut from a sheet of uncured rubber in a manner similar to that described with reference to FIG. 2. Referring to FIG. 4, section 130 is constructed from multiple subparts including base subparts 132 and 134, shoulder subparts 136 and 152, and rib subparts 138, 140, 142, 148, and 150. Rib subpart 142 includes an interlocking feature shown here as a finger 144 that fits into a groove or slot 146 between base subparts 132 and 134. Finger 144 is provided by way of example only - other interlocking features may be employed as well.

The use of multiple subparts as shown allows tread layer 100 to be manufactured using different rubber compositions for various components of the tread layer. For example, rib subparts 138, 140, 142, 148, and/or 150 may cut from a sheet having a first uncured rubber composition, shoulder subparts 136 and 152 may be cut from a sheet having a second uncured rubber composition, and base subparts 132 and 134 may be cut from a sheet having yet a third rubber composition. The different rubber compositions might be desirable e.g., to impart different performance properties to different parts of the resulting tread layer 100.

As shown in FIG. 5, the various subparts are combined to create section 130. The subparts may have sufficient tackiness to hold together or a dissolution may be applied in manner as previously described for combining sections 130. For this exemplary embodiment, subparts 136, 138, 140, 142, 148, 150, and 152 are stacked along radial direction R onto subparts 132 and 134. As shown in FIG. 6, the resulting sections 130 may be joined in an adjacent manner along circumferential direction C in a manner as previously described with reference to FIG. 3.

The present invention is not limited to the particular shapes, interlocking features, and number of subparts shown in FIGS. 4, 5, and 6. As will be understood using the teaching disclosed herein, other configurations may be used as well. By way of example, subparts may be creating with cavities or openings into which other subparts are received such that a tread having one rubber composition enclosed or encased within another rubber composition may be provided.

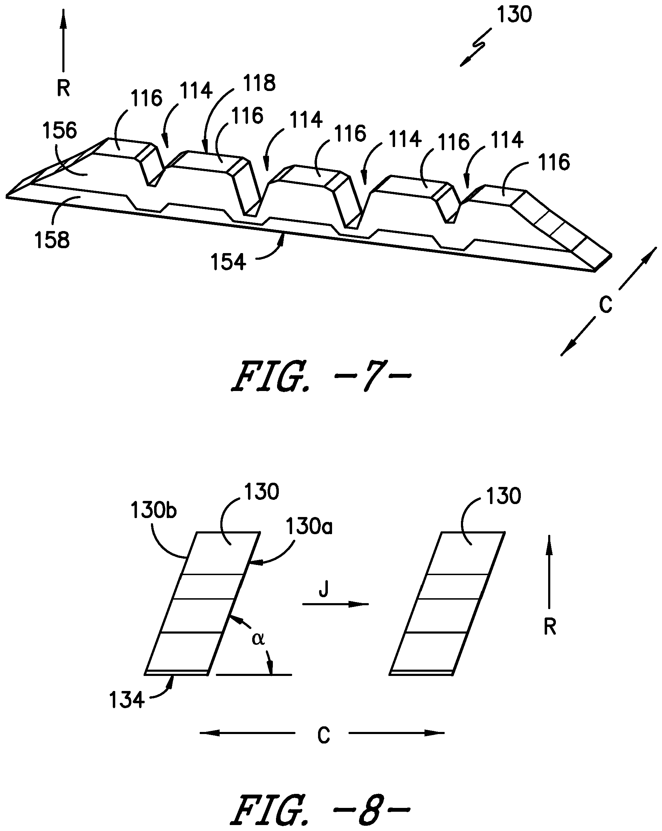

FIG. 7 provides another exemplary embodiment of a section 130 as may be used with the present invention. More particularly, for this embodiment section 130 is constructed from an upper subpart 156 stacked along radial direction R onto a lower subpart 158. The upper subpart 156 include features that provide e.g., tread ribs 116 separate by tread grooves 114. Similar to the embodiments of FIGS. 4, 5, and 6, a first uncured rubber composition can be used for upper subpart 156 and a second uncured rubber composition can be used for lower subpart 158. For example, the first uncured rubber composition might be preferable at early stages of tread wear and the second uncured rubber composition might be preferable at later stages of tread wear. Alternatively, section 130 might be created for purposes of testing a tread having such different rubber compositions.

FIG. 8 provides a side view of another exemplary section 130 of the present invention. Unlike previous embodiments depicted in the figures, the exemplary embodiment of FIG. 8 has opposing faces 130a and 130b that are beveled or i.e., provided at a non-zero angle α relative to bottom surface 154. The beveling of faces 130a and 130b could be provided by the angle used for jet 124 relative to sheet 130 (FIG. 2) and may be desirable to e.g., increase the surface areas of faces 130a and 130b available for joining adjacent sections 130 along circumferential direction C. In another exemplary embodiment of the invention, only one of the faces 130a or 130b may be beveled while the opposing face is orthogonal to bottom 154 - i.e. an angle α of about zero.

FIG. 9 illustrates an exemplary tire 98 constructed from multiple tread layer segments 100a, 100b, 100c, and 100d. Each tread layer segment may have a design that differs from the other tread layer segments by having e.g., a different composition, tread features, and/or profile. By placing these different tread layer segments on the same tire, multiple different designs can be tested at the same time and under the same conditions, which can be highly advantageous in research and development. Furthermore, the present invention allows the rapid manufacture of the different tread layer segments 100a, 100b, 100c, and 100d without the waste and expense concomitant with conventional tread layer extrusion techniques.

While the present subject matter has been described in detail with respect to specific exemplary embodiments and methods thereof, it will be appreciated that those skilled in the art, upon attaining an understanding of the foregoing may readily produce alterations to, variations of, and equivalents to such embodiments. Accordingly, the scope of the present disclosure is by way of example rather than by way of limitation, and the subject disclosure does not preclude inclusion of such modifications, variations and/or additions to the present subject matter as would be readily apparent to one of ordinary skill in the art using the teachings disclosed herein.

## Claims

1. A method for creating a tread for a tire, the tire defining a circumferential direction, comprising:
cutting multiple, discrete sections (130) out of a sheet (120) having a thickness (T) comprising an uncured rubber, wherein each section (130) has a pair of opposing faces (130a, 130b) separated by thickness (T);
creating a tread layer (100) by joining the sections together along the circumferential direction so that the faces of one section are joined with the opposing faces of adjacent sections; and
applying the tread layer to a tire intermediate after the step of creating so as to form the tire.

2. The method for creating a tread for a tire as in claim 1, wherein the cutting comprises cutting multiple, discrete subparts (132, 134, 136, 138, 140, 142, 148, 150) from the sheet and combining the subparts to create the sections.

3. The method for creating a tread for a tire as in claims 1 or 2, wherein the sections have corresponding profiles forming the shape of the tread along the circumferential direction of the tire, wherein the corresponding profiles were created by the cutting.

4. The method for creating a tread for a tire as in claims 2 or 3, wherein the tire defines a radial direction, and wherein the subparts are stacked along the radial direction to create the sections.

5. The method for creating a tread for a tire as in claims 2, 3, or 4, wherein the combining comprises applying a dissolution to the subparts.

6. The method for creating a tread for a tire as in any of the preceding claims, wherein the creating comprises applying a dissolution to one or more opposing faces of adjacent sections before joining the sections together.

7. The method for creating a tread for a tire as in any of the preceding claims, wherein the cutting further comprises cutting interlocking features into the sections.

8. The method for creating a tread for a tire as in any of the preceding claims, wherein the cutting comprises directing a jet of water (124) towards the sheet while moving the jet to provide the shape of the sections.

9. The method for creating a tread for a tire as in claim 8, wherein the jet of water has a diameter in the range of 0.1 mm to 0.5 mm.

10. The method for creating a tread for a tire as in any of the preceding claims, further comprising
repeating the cutting and creating with multiple sheets comprising different compositions so as to create multiple tread layers from the different compositions; and
wherein the applying comprises applying the multiple tread layers around a circumferential direction of the tire intermediate.

11. The method for creating a tread for a tire as in any of the preceding claims, wherein the sheet has a thickness in the range of about 3 mm to about 100 mm.

12. The method for creating a tread for a tire as in claim 11, wherein the sheet has a thickness in about 10 mm.

13. The method for creating a tread for a tire as in any of the preceding claims, wherein the creating further comprises applying pressure along a circumferential direction after joining two or more sections together.

14. The method for creating a tread for a tire as in any of the preceding claims, further comprising curing the tread layer and tire intermediate after the applying.

15. The method for creating a tread for a tire as in claim 1, wherein the creating further comprises activating the opposing faces of the sections prior to joining the sections.

## Patentansprüche

1. Verfahren zum Erzeugen einer Lauffläche für einen Reifen, wobei der Reifen eine Umfangsrichtung festlegt, umfassend:
Schneiden von mehreren getrennten Abschnitten (130) aus einem Bogen (120), der eine Dicke (T) hat, die einen unvulkanisierten Gummi umfasst, wobei jeder Abschnitt (130) ein Paar von gegenüberliegenden Flächen (130a, 130b) hat, die durch die Dicke (T) getrennt sind;
Erzeugen einer Laufflächenschicht (100) durch Verbinden der Abschnitte entlang der Umfangsrichtung, sodass die Flächen von einem Abschnitt mit den entgegengesetzten Flächen von benachbarten Abschnitten verbunden sind; und
Auftragen der Laufflächenschicht auf ein Reifenzwischenglied nach dem Schritt des Erzeugens, um so den Reifen zu bilden.

2. Verfahren zum Erzeugen einer Lauffläche für einen Reifen nach Anspruch 1, wobei das Zuschneiden das Schneiden von mehreren, getrennten Teilabschnitten (132, 134, 136, 138, 140, 142, 148, 150) vom Bogen und das Kombinieren der Teilabschnitte umfasst, um die Abschnitte zu erzeugen.

3. Verfahren zum Erzeugen einer Lauffläche für einen Reifen nach Anspruch 1 oder 2, wobei die Abschnitte entsprechende Profile haben, die die Form der Lauffläche in der Umfangsrichtung des Reifens bilden, wobei die entsprechenden Profile durch das Schneiden erzeugt wurden.

4. Verfahren zum Erzeugen einer Lauffläche für einen Reifen nach Anspruch 2 oder 3, wobei der Reifen eine radiale Richtung definiert, und wobei die Teilabschnitte entlang der radialen Richtung zusammengesetzt werden, um die Abschnitte zu erzeugen.

5. Verfahren zum Erzeugen einer Lauffläche für einen Reifen nach Anspruch 2, 3 oder 4, wobei das Kombinieren das Auftragen eines Auflösungsprofils auf die Teilabschnitte umfasst.

6. Verfahren zum Erzeugen einer Lauffläche für einen Reifen nach einem der vorherigen Ansprüche, wobei das Erzeugen das Auftragen eines Auflösungsprofils auf eine oder mehrere entgegengesetzte Flächen von benachbarten Abschnitten umfasst, bevor die Abschnitte zusammengefügt werden.

7. Verfahren zum Erzeugen einer Lauffläche für einen Reifen nach einem der vorherigen Ansprüche, wobei das Schneiden ferner das Schneiden von ineinandergreifenden Elementen in die Abschnitte umfasst.

8. Verfahren zum Erzeugen einer Lauffläche eines Reifens nach einem der vorherigen Ansprüche, wobei das Schneiden das Richten eines Wasserstrahls (124) auf den Bogen umfasst, während der Strahl bewegt wird, um für die Form der Abschnitte zu sorgen.

9. Verfahren zum Erzeugen einer Lauffläche für einen Reifen nach Anspruch 8, wobei der Wasserstrahl einen Durchmesser im Bereich von 0,1 mm bis 0,5 mm hat.

10. Verfahren zum Erzeugen einer Lauffläche für einen Reifen nach einem der vorherigen Ansprüche, ferner umfassend
Wiederholen des Schneidens und Erzeugens mit mehreren Bögen, die verschiedene Zusammensetzungen umfassen, um so mehrere Laufflächenschichten aus unterschiedlichen Zusammensetzungen zu erzeugen; und
wobei das Auftragen das Auftragen der mehreren Laufflächenschichten rund um eine Umfangsrichtung des Reifenzwischenglieds umfasst.

11. Verfahren zum Erzeugen einer Lauffläche für einen Reifen nach einem der vorherigen Ansprüche, wobei der Bogen eine Dicke im Bereich von etwa 3 mm bis etwa 100 mm hat.

12. Verfahren zum Erzeugen einer Lauffläche für einen Reifen nach Anspruch 11, wobei der Bogen eine Dicke von etwa 10 mm hat.

13. Verfahren zum Erzeugen einer Lauffläche für einen Reifen nach einem der vorherigen Ansprüche, wobei das Erzeugen ferner das Anwenden von Druck entlang einer Umfangsrichtung nach dem Verbinden von zwei oder mehr Abschnitten miteinander umfasst.

14. Verfahren zum Erzeugen einer Lauffläche für einen Reifen nach einem der vorherigen Ansprüche, das ferner das Härten der Laufflächenschicht und des Reifenzwischenglieds nach dem Auftragen umfasst.

15. Verfahren zum Erzeugen einer Lauffläche für einen Reifen nach Anspruch 1, wobei das Erzeugen ferner das Aktivieren der entgegengesetzten Flächen der Abschnitte vor dem Verbinden der Abschnitte umfasst.

## Revendications

1. Procédé de création d'une bande de roulement d'un pneu, le pneu définissant une direction circonférentielle, comprenant les opérations, consistant à :
couper de multiples sections distinctes (130) à partir d'une feuille (120) ayant une épaisseur (T), comprenant un caoutchouc non vulcanisé, dans lequel chaque section (130) a une paire de faces opposées (130a, 130b), séparées par l'épaisseur (T) ;
créer une couche de bande de roulement (100) en reliant les sections ensemble le long de la direction circonférentielle, de sorte que les faces d'une section sont reliées aux faces opposées de sections adjacentes et
appliquer la couche de bande de roulement à un élément intermédiaire du pneu après l'étape de création, de façon à former le pneu.

2. Procédé de création d'une bande de roulement d'un pneu selon la revendication 1, dans lequel l'opération de coupe comprend l'opération consistant à couper de multiples sous-parties distinctes (132, 134, 136, 138, 140, 142, 148, 150) dans la feuille et à combiner les sous-parties pour créer les sections.

3. Procédé de création d'une bande de roulement d'un pneu selon les revendications 1 ou 2, dans lequel les sections ont des profils correspondants, constituant la forme de la bande de roulement le long de la direction circonférentielle du pneu, dans lequel les profils correspondants ont été créés par l'opération de coupe.

4. Procédé de création d'une bande de roulement d'un pneu selon les revendications 2 ou 3, dans lequel le pneu définit une direction radiale et dans lequel les sous-parties sont superposées le long de la direction radiale, pour créer les sections.

5. Procédé de création d'une bande de roulement d'un pneu selon les revendications 2, 3 ou 4, dans lequel l'opération de combinaison comprend l'opération, consistant à appliquer une dissolution aux sous-parties.

6. Procédé de création d'une bande de roulement d'un pneu selon l'une quelconque des revendications précédentes, dans lequel l'opération de création comprend l'opération, consistant à appliquer une dissolution à une ou plusieurs faces opposées de sections adjacentes avant de relier les sections ensemble.

7. Procédé de création d'une bande de roulement d'un pneu selon l'une quelconque des revendications précédentes, dans lequel l'opération de coupe comprend en outre l'opération, consistant à couper des éléments d'interverrouillage dans les sections.

8. Procédé de création d'une bande de roulement d'un pneu selon l'une quelconque des revendications précédentes, dans lequel l'opération de coupe comprend l'opération, consistant à diriger un jet d'eau (124) vers la feuille, tout en déplaçant le jet, pour fournir la forme des sections.

9. Procédé de création d'une bande de roulement d'un pneu selon la revendication 8, dans lequel le jet d'eau a un diamètre dans la gamme de 0,1 mm à 0,5 mm.

10. Procédé de création d'une bande de roulement d'un pneu selon l'une quelconque des revendications précédentes, comprenant en outre les opérations, consistant à
répéter les opérations de coupe et de création avec de multiples feuilles comprenant différentes compositions, de façon à créer de multiples couches de bandes de roulement à partir des compositions différentes et
dans lequel l'opération d'application comprend l'opération, consistant à appliquer les multiples couches de bandes de roulement autour d'une direction circonférentielle de l'élément intermédiaire du pneu.

11. Procédé de création d'une bande de roulement d'un pneu selon l'une quelconque des revendications précédentes, dans lequel la feuille a une épaisseur dans la gamme d'environ 3 mm à environ 100 mm.

12. Procédé de création d'une bande de roulement d'un pneu selon la revendication 11, dans lequel la feuille a une épaisseur d'environ 10 mm.

13. Procédé de création d'une bande de roulement d'un pneu selon l'une quelconque des revendications précédentes, dans lequel l'opération de création comprend en outre l'opération, consistant à appliquer de la pression le long d'une direction circonférentielle, après avoir relié deux ou plusieurs sections ensemble.

14. Procédé de création d'une bande de roulement d'un pneu selon l'une quelconque des revendications précédentes, comprenant en outre l'opération, consistant à vulcaniser la couche de bande de roulement et l'élément intermédiaire du pneu après l'opération d'application.

15. Procédé de création d'une bande de roulement d'un pneu selon la revendication 1, dans lequel l'opération de création comprend en outre l'opération, consistant à activer les faces opposées des sections avant de relier les sections.
